# EUROPÄISCHE PATENTANMELDUNG

(11) **EP 1 143 282 A2**
(43) Veröffentlichungstag der Anmeldung: **10.10.2001**
(21) Anmeldenummer: 00127764.9
(22) Anmeldetag: 19.12.2000
(51) Int. Cl.: G02B 26/00, G02B 26/08, G02B 21/00

(54) **Optische Anordnung**

(30) Priorität: 03.04.2000 DE 10016361
(71) Anmelder: Leica Microsystems Heidelberg GmbH, 68165 Mannheim (DE)
(72) Erfinder: Engelhardt, Johann, Dr., 76669 Schönborn (DE)
(74) Vertreter: Naumann, Ulrich, Dr.-Ing.

(57) **Zusammenfassung**

Eine optische Anordnung zur zumindest teilweisen spektralen Selektion von Lichtanteilen aus einem Mehrfarbenlichtstrahl (1) ist im Hinblick auf vielfältige spektrale Selektionsmöglichkeiten mit konstruktiv einfachen Mitteln derart ausgestaltet, daß ein dispersives Medium (2) zur spektralen räumlichen Auffächerung des Mehrfarbenlichtstrahls (1) in einzelne Lichtbündel (3) und ein Abschwächungsmittel (5, 6) zur zumindest teilweisen Abschwächung der Intensität eines oder mehrerer Lichtbündel (3) vorgesehen ist.

## Beschreibung

Die Erfindung betrifft eine optische Anordnung zur zumindest teilweisen spektralen Selektion von Lichtanteilen aus einem Mehrfarbenlichtstrahl.

Bei vielen optischen Anwendungen ist es erforderlich, aus einem Mehrfarbenlichtstrahl, der spektral unterschiedliche Lichtanteile aufweist, bestimmte spektrale Lichtanteile auszublenden oder abzuschwächen und wiederum andere Lichtanteile nicht auszublenden und nicht abzuschwächen. Hierdurch wird ein Mehrfarbenlichtstrahl oder Mehrfarbenlichtbündel hinsichtlich seines Spektrums selektiv eingestellt.

Beispielsweise in der konfokalen Rastermikroskopie verwendet man unter anderem Mehrlinienlaser zur Beleuchtung der Probe, wobei man die Lichtleistungen bzw. Lichtintensitäten der einzelnen Linien getrennt voneinander regulieren und wahlweise einzelne spektrale Lichtanteile ausblenden möchte. Zu diesem Zweck werden unter anderem akustooptische Modulatoren verwendet.

Die bislang verwendeten akustooptischen Modulatoren sind einerseits sehr flexibel, weisen aber andererseits den großen Nachteil auf, daß sie sehr aufwendig im Aufbau und in der elektronischen Ansteuerung sind und nicht zuletzt deswegen sehr teuer sind.

Der vorliegenden Erfindung liegt daher die Aufgabe zugrunde, eine optische Anordnung zur zumindest teilweisen spektralen Selektion von Lichtanteilen aus einem Mehrfarbenlichtstrahl der eingangs genannten Art anzugeben, bei der vielfältige spektrale Selektionsmöglichkeiten mit konstruktiv einfachen Mitteln realisiert sind.

Erfindungsgemäß ist die voranstehende Aufgabe durch eine optische Anordnung mit den Merkmalen des Patentanspruchs 1 gelöst. Danach ist die optische Anordnung der eingangs genannten Art derart ausgestaltet, daß sie ein dispersives Medium zur spektralen räumlichen Auffächerung des Mehrfarbenlichtstrahls in einzelne Lichtbündel und ein Abschwächungsmittel zur zumindest teilweisen Abschwächung der Intensität eines oder mehrerer Lichtbündel aufweist.

In erfindungsgemäßer Weise ist zunächst erkannt worden, daß vielfältige spektrale Selektionsmöglichkeiten nicht nur durch aufwendige akustooptische Modulatoren realisierbar sind. Hierzu ist in weiter erfindungsgemäßer Weise eine Anordnung bereitgestellt, die eine quasi mechanische Selektion einzelner Lichtbündel ermöglicht. Hierzu ist zunächst ein dispersives Medium zur spektralen räumlichen Auffächerung des Mehrfarbenlichtstrahls in einzelne Lichtbündel bereitgestellt. Nach dieser Auffächerung findet dann eine vorgebbare teilweise oder vollständige Abschwächung der Intensität eines oder mehrerer vorgebbarer Lichtbündel mittels eines Abschwächungsmittels statt. Es ist also sowohl eine Intensitätsreduktion als auch eine vollständige Ausblendung eines Lichtbündels möglich. Mit dem Begriff Lichtbündel ist ein Lichtstrahl bezeichnet, der eine oder mehrere diskrete Wellenlängen oder ein Wellenlängenband aufweist. Bei der erfindungsgemäßen Anordnung ist üblicherweise keine aufwendige elektronische Ansteuerung erforderlich. Dies vereinfacht und verbilligt den Aufbau erheblich.

Folglich ist mit der erfindungsgemäßen optischen Anordnung eine Anordnung bereitgestellt, bei der vielfältige spektrale Selektionsmöglichkeiten mit konstruktiv einfachen Mitteln realisiert sind.

Bei einer konkreten, sehr einfachen Ausführung der optischen Anordnung könnte das dispersive Medium ein Prisma aufweisen. Derartige Prismen sind seit langem bekannt und sind üblicherweise sehr einfach herzustellen.

Das Prisma könnte innerhalb einer durch die aufgefächerten Lichtbündel aufgespannten Ebene um eine senkrecht zu der Ebene verlaufende Achse drehbar sein. Hierdurch ist eine räumliche Verschiebung der Lichtbündel ermöglicht. Diese Verschiebung kann in Zusammenwirkung mit dem Abschwächungsmittel zur teilweisen oder vollständigen Abschwächung eines oder mehrerer Lichtbündel genutzt werden. Hierbei könnte an das Verschieben im Bereich einer Blende als Abschwächungsmittel gedacht werden.

Dem Prisma könnte in besonders praktischer Weise eine Optik nachgeordnet sein, die vorzugsweise eine Linse aufweist. Hierdurch ist es möglich, die aufgefächerten Lichtbündel parallel zu führen.

Bei einer weiteren Ausführung könnte das dispersive Medium eine Vier-Prismen-Anordnung aufweisen. Im konkreten könnte die Vier-Prismen-Anordnung aus zwei zueinander spiegelsymmetrisch angeordneten Prismenpaaren bestehen. Dabei werden die vom ersten Prisma spektral aufgefächerten und divergenten Lichtbündel vom zweiten Prisma kollimiert. Die Prismenpaare könnten des weiteren bezüglich einer Senkrechten zur Ausbreitungsrichtung der Lichtbündel spiegelsymmetrisch angeordnet sein. Das zweite Prismenpaar dient dabei zur Wiedervereinigung der Lichtbündel. Zwischen den Prismenpaaren wird die Manipulation bezüglich eines Ausblendens und Abschwächens mittels des Abschwächungsmittels vorgenommen. Soll das Licht nach Durchlaufen der Anordnung eine Apertur durchlaufen oder in eine Lichtleitfaser eingekoppelt werden, so ist unbedingt darauf zu achten, daß die räumlich spektrale Auffächerung vollständig aufgehoben ist. Ansonsten können an der Apertur oder bei der Fasereinkopplung spektral unterschiedlich hohe Verluste auftreten. Hierbei ist insbesondere günstig, wenn das zweite Prismenpaar exakt spiegelsymmetrisch zum ersten Prismenpaar justiert ist.

Bei einer weiteren Ausführungsform könnte das dispersive Medium einen Glaskörper aufweisen. Der Glaskörper könnte insbesondere quaderförmig, mit zwei parallelogrammförmigen Seitenflächen oder trapezoidal ausgebildet sein. Im Hinblick auf eine sichere Wiedervereinigung der aufgefächerten Lichtbündel könnten zwei Glaskörper bezüglich einer Senkrechten zur Ausbreitungsrichtung der Lichtbündel spiegelsymmetrisch angeordnet sein. Bei einer derartigen Anordnung aus Glaskörpern sind die hohen Anforderungen an die Justiergenauigkeit reduziert. Während eine Verkippung eines Primas einen Winkelfehler und, wenn das verkippte Prisma eines der inneren Prismen ist, einen Strahlversatz zur Folge hat, was wiederum eine korrekte spektrale Wiedervereinigung verhindert, führt eine Verkippung eines der Glaskörper lediglich zu einem Parallelversatz, der die spektralen Eigenschaften der Anordnung nur in geringem Maß beeinträchtigt. Insbesondere wird eine Einkopplung in eine Lichtleitfaser nach der Anordnung nicht beeinflußt, da die kollimierten wiedervereinigten Lichtbündel auch bei einem Strahlversatz durch die Einkoppeloptik auf das Faserende fokussiert werden. Insoweit ist durch eine Ausführung der optischen Anordnung mit zwei Glaskörpern eine vereinfache optische Anordnung bereitgestellt.

In einer weiteren alternativen Ausführungsform könnte das dispersive Medium ein Gitter aufweisen.

Im Hinblick auf eine sichere und gleichzeitig einfache Selektion von Lichtanteilen aus einem Mehrfarbenlichtstrahl könnte das Abschwächungsmittel eine oder mehrere miteinander kombinierte Blenden aufweisen. Hierdurch ist eine sichere mechanische Beeinflussung des oder der Lichtbündel realisiert.

Im konkreten könnte die Blende oder die Blenden durch mindestens ein um eine Drehachse drehbar gelagertes Blendenrad realisiert sein. Auf einem derartigen Blendenrad sind eine oder mehrere Blenden realisiert.

Hinsichtlich einer besonders vielfältigen Selektion könnten mehrere Blendenräder hintereinander angeordnet sein. Ein Blendenrad ist üblicherweise derart positioniert, daß Lichtbündel gleicher Farbe konzentrische Kreise auf dem Blendenrad beschreiben, wenn man das Blendenrad dreht.

Das Blendenrad oder die Blendenräder könnten mindestens einen Blendendurchgang aufweisen. Die Drehachse eines Blendenrads könnte in besonders günstiger Weise parallel zur Ausbreitungsrichtung den Lichtbündel angeordnet sein. Im konkreten könnte das Blendenrad eine Scheibe mit mindestens einem Blendendurchgang aufweisen. Auf einer derartigen Scheibe lassen sich unterschiedliche Blendenformen realisieren, die sowohl ein vollständiges Ausblenden der räumlich getrennten Lichtbündel als auch eine Abschwächung oder Teilblokkierung der Lichtbündel ermöglichen könnten.

Zur wirksamen Strahlabschwächung könnte die Scheibe ein Muster an Blendendurchgängen mit unterschiedlicher Anordnungsdichte aufweisen. Je nach gewähltem Bereich auf der Scheibe könnte dann eine unterschiedlich starke Abschwächung eines oder mehrere Lichtbündel realisiert werden.

Bei einem alternativen Ausführungsbeispiel könnte die Blende oder könnten die Blenden durch einen oder mehrere Blendenschieber realisiert sein. Dabei werden die Blendenschieber, die eine oder mehrere Blenden aufweisen, zur Abschwächung oder Blockierung eines oder mehrere Lichtbündel in den Strahlengang geschoben. Hierbei könnten mehrere Blendenschieber hintereinander angeordnet sein, um eine große Vielfalt an Beeinflussungsmöglichkeiten bereitzustellen. Die Schieberichtung des oder der Blendenschieber könnte in besonders effektiver Weise senkrecht zur Ausbreitungsrichtung der Lichtbündel verlaufen. Der oder die Blendenschieber könnten mindestens einen Blendendurchgang aufweisen.

Sowohl bei einem Blendenrad als auch bei einem Blendenschieber könnte mindestens ein Blendendurchgang kreisrund ausgebildet sein. Je nach Größe des Durchmessers des kreisrunden Blendendurchgangs im Verhältnis zum Durchmesser des zu beeinflussenden Lichtstrahls kann eine stärkere oder geringere Abschwächung des Lichtbündels erreicht werden.

Hinsichtlich eines besonders sensiblen und genau justierbaren Abschwächungsvorgangs könnte mindestens ein Blendendurchgang eine sich entlang einer vorgebbaren Strecke reduzierende Öffnungsweite aufweisen oder kometenschweifartig ausgebildet sein, so daß sich die Intensität eines durch den Blendendurchgang beeinflußten Lichtbündels durch Drehen des Blendenrads oder Verschieben des Blendenschiebers verändern läßt. Je nach Position des Blendenrads oder des Blendenschiebers ist das betrachtete Lichtbündel unterschiedlich stark abgeschwächt.

Alternativ oder zusätzlich zu einer Blendenanordnung könnte das Abschwächungsmittel einen oder mehrere Polarisatoren oder Polarisationsoptiken aufweisen. Dabei könnte insbesondere eine Kombination aus zwei Linearpolarisatoren vorgesehen sein, wobei mindestens ein Linearpolarisator drehbar gelagert sein könnte. Bei ohnehin meist polarisiertem Laserlicht könnte ein einziger Polarisationsfilter eine hinreichende Abschwächung bewirken.

Des weiteren könnte das Abschwächungsmittel alternativ oder zusätzlich LCD-Elemente aufweisen. Allerdings sollte bei der Verwendung von LCD-Elementen darauf geachtet werden, daß es beispielsweise bei Verwendung der Anordnung in einem Scanmikroskop aufgrund der periodischen Transmissionsänderungen der LCDs nicht zu Schwebungseffekten mit der Strahlablenkfrequenz einer Scaneinrichtung kommt. Hierzu könnte in besonders vorteilhafter Weise die LCD-Ansteuerfrequenz mit der Strahlablenkfrequenz synchronisiert sein. Des weiteren könnte es möglich sein, Intensitätsschwankungen elektronisch oder softwaregesteuert nach der Datennahme zu korrigieren.

Bei der Verwendung eines LCD-Abschwächers könnte in weiter vorteilhafter Weise der LCD-Abschwächer zum Abschalten des Lichtstrahls und insbesondere des Scanlichtstrahls an Strahlumkehrpunkten ausgebildet sein.

Alternativ oder zusätzlich könnte das Abschwächungsmittel Graukeile oder Neutraldichtefilter aufweisen.

Eine Abschwächung der Intensität eines oder mehrerer einzelner Lichtbündel könnte des weiteren durch eine Art gestörte Totalreflexion erfolgen. Hierzu könnte das Abschwächungsmittel mindestens eine die Totalreflexion eines Lichtbündels an einer Grenzfläche beeinflussende Einrichtung aufweisen. Im konkreten könnte bei einer derartigen Anordnung das farblich gemischte Lichtbündel - der Mehrfarbenlichtstrahl - durch Brechung an einer Ebene eines Glaskörpers räumlich spektral aufgefächert werden. Der Glaskörper könnte dabei so geschnitten sein, daß die farblich getrennt verlaufenden Lichtbündel mindestens eine Totalreflexion an einer weiteren Grenzebene erleiden, bevor sie den Glaskörper verlassen. Zur Beeinflussung der Totalreflexion an der Grenzfläche bzw. Grenzebene könnte die Einrichtung ein der Grenzfläche annäherbares Glaselement aufweisen. Hierdurch könnte der Anteil des totalreflektierten Lichts eines jeden Lichtbündels in Abhängigkeit von der Annäherungsdistanz des Glaselements von außen an die totalreflektierende Grenzfläche eingestellt werden. Bei vollständig anliegendem Glaselement verläßt das Licht den Glaskörper durch das Glaselement. Eine Totalreflexion findet dann nicht statt, und das betreffende Lichtbündel ist folglich vollkommen ausgeblendet bzw. abgeschwächt. Mit anderen Worten wird durch die gezielte Annäherung eines Glaselements an die totalreflektierende Grenzfläche der Grad der Totalreflexion eines Lichtbündels gezielt eingestellt.

Zur Steuerung der Annäherung des Glaselements könnte ein Stellelement bereitgestellt sein. Im konkreten könnte das Stellelement ein Piezostellelement sein.

Im Hinblick auf eine besonders vielfältige Selektion könnte jedem Lichtbündel eine die Totalreflexion eines Lichtbündels an einer Grenzfläche beeinflussende Einrichtung zugeordnet sein.

Wird ein Lichtbündel durch ein mechanisches Element wie beispielsweise eine Blende transversal "angeschnitten", so führt dies zu einer Verformung des transversalen Strahlquerschnitts. Dies läßt sich heilen, wenn man das Licht in eine Monomode-Glasfaser eintreten läßt. Daher könnte das Abschwächungsmittel selbst eine Monomode-Glasfaser aufweisen, mit der das Lichtbündel "angeschnitten" wird.

Grundsätzlich könnte das Abschwächungsmittel eine Lochblende aufweisen, die vorzugsweise in ihrem Durchmesser einstellbar ist. Hierdurch ist ein einerseits vielseitiges und andererseits konstruktiv einfaches Abschwächungsmittel bereitgestellt.

Nach der Auffächerung und Abschwächung des oder der Lichtbündel ist es meist erforderlich, das oder die verbleibenden Lichtbündel wieder zu vereinigen, um einen einzelnen Lichtstrahl oder ein einzelnes Lichtbündel bereitzustellen. Hierzu könnte nach dem Abschwächungsmittel ein zweites dispersives Medium zur Wiedervereinigung der verbleibenden Lichtbündel bereitgestellt sein.

Alternativ zu einem derartigen zweiten dispersiven Medium könnte nach dem Abschwächungsmittel eine Reflexionseinrichtung für das oder die Lichtbündel angeordnet sein. Mit anderen Worten erfolgt hier eine Wiedervereinigung nach der Manipulation einzelner Lichtbündel durch rückwärtiges Durchlaufen der auffächernden optischen Elemente bzw. des auffächernden dispersiven Mediums. Zur besseren Trennung des ursprünglichen Mehrfarbenlichtstrahls vom resultierenden Lichtstrahl bzw. Lichtbündel könnte die Reflexionseinrichtung derart angeordnet und/oder ausgebildet sein, daß das oder die reflektierten Lichtbündel mit einem von Null Grad zumindest geringfügig verschiedenen Reflexionswinkel reflektierbar ist oder sind. Somit wird das Licht unmittelbar hinter dem Abschwächungsmittel mit einem leicht von Null Grad verschiedenen Reflexionswinkel in das dispersive Medium reflektiert.

In einer konstruktiv besonders einfachen Ausgestaltung könnte die Reflexionseinrichtung einen Spiegel aufweisen.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche, andererseits auf die nachfolgende Erläuterung von sechs Ausführungsbeispielen der erfindungsgemäßen optischen Anordnung anhand der Zeichnung zu verweisen. In Verbindung mit der Erläuterung der bevorzugten Ausführungsbeispiele der erfindungsgemäßen optischen Anordnung anhand der Zeichnung werden auch im allgemeinen bevorzugte Ausgestaltungen und Weiterbildungen der Lehre erläutert. In der Zeichnung zeigen
- Fig. 1: in einer schematischen Darstellung das erste Ausführungsbeispiel einer erfindungsgemäßen optischen Anordnung,
- Fig. 2: in einer schematischen Darstellung das zweite Ausführungsbeispiel einer erfindungsgemäßen optischen Anordnung, wobei hier eine Vier-Prismen-Anordnung realisiert ist,
- Fig. 3: in einer schematischen Darstellung das dritte Ausführungsbeispiel einer erfindungsgemäßen optischen Anordnung, wobei hier zwei Glaskörper vorgesehen sind,
- Fig. 4: in einer schematischen Draufsicht ein Blendenrad aus Fig. 2,
- Fig. 5: in einer schematischen Darstellung das vierte Ausführungsbeispiel einer erfindungsgemäßen optischen Anordnung, wobei hier Blendenschieber als Abschwächungsmittel vorgesehen sind,
- Fig. 6: in einer schematischen Darstellung das fünfte Ausführungsbeispiel einer erfindungsgemäßen optischen Anordnung, wobei hier eine Reflexionseinrichtung zur Reflexion der beeinflußten Lichtbündel vorgesehen ist, und
- Fig. 7: in einer schematischen Darstellung das sechste Ausführungsbeispiel einer erfindungsgemäßen optischen Anordnung.

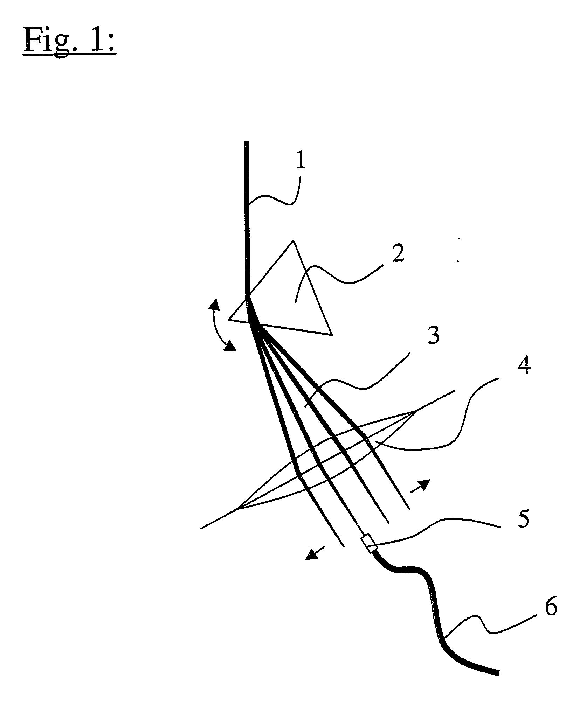

Fig. 1 zeigt in einer schematischen Darstellung das erste Ausführungsbeispiel einer erfindungsgemäßen optischen Anordnung. Ein vierfarbiger einlaufender Mehrfarbenlichtstrahl 1 bzw. mehrfarbiges Lichtbündel wird mit einem als Prisma 2 ausgebildeten dispersiven Medium räumlich spektral in vier Lichtbündel 3 aufgespalten. Die einzelnen Lichtbündel 3 werden mit einer Optik 4 fokussiert bzw. parallel geführt. Die Optik 4 weist eine Linse auf. Durch Drehen des Prismas 2 läßt sich das Lichtbündel 3 auswählen, das über eine Einkoppeloptik 5 in eine Glasfaser 6 eingekoppelt wird. Die Glasfaser 6 könnte eine Monomode-Glasfaser sein. Durch feines Drehen des Prismas 2 läßt sich eine streifende Einkopplung und somit eine Abschwächung erzielen.

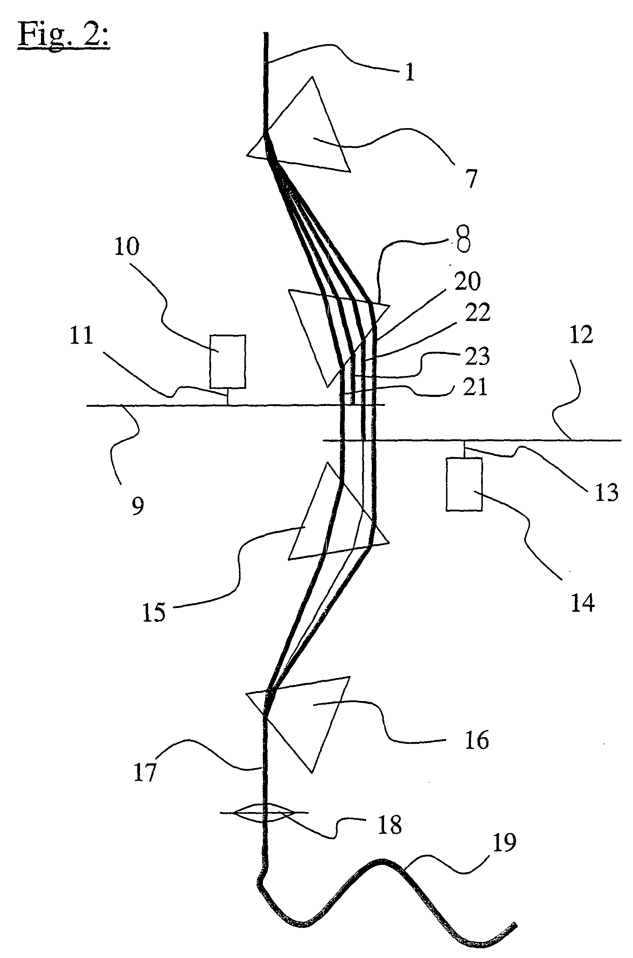

Fig. 2 zeigt in einer schematischen Darstellung das zweite Ausführungsbeispiel einer erfindungsgemäßen optischen Anordnung. Dabei ist die optische Anordnung als Vier-Prismen-Anordnung ausgebildet. Die Vier-Prismen-Anordnung ist aus zwei Prismenpaaren gebildet. Das erste Prismenpaar umfaßt die Prismen 7 und 8. Als Abschwächungsmittel ist dann ein Blendenrad 9 vorgesehen, das mittels eines Stellantriebs 10 über eine Welle 11 antreibbar ist. Dem Blendenrad 9 ist ein weiteres Blendenrad 12 nachgeordnet, das über eine Welle 13 und einen Stellantrieb 14 antreibbar ist.

Das zweite Prismenpaar wird durch die Prismen 15 und 16 gebildet, die eine Wiedervereinigung der aufgefächerten Lichtbündel 20, 21, 22 und 23 in ein vereinigtes Lichtbündel 17 bewirken. Das Lichtbündel 17 wird mittels einer Einkoppeloptik 18 in eine Glasfaser 19 fokussiert.

Bei dem vorangehenden zweiten Ausführungsbeispiel passieren die Lichtbündel 20 und 21 beide Blendenräder 9 und 12 ungestört. Das Lichtbündel 23 wird vom Blendenrad 9 blockiert, während das Lichtbündel 22 vom Blendenrad 12 transversal beschnitten und somit in der Gesamtlichtintensität geschwächt wird.

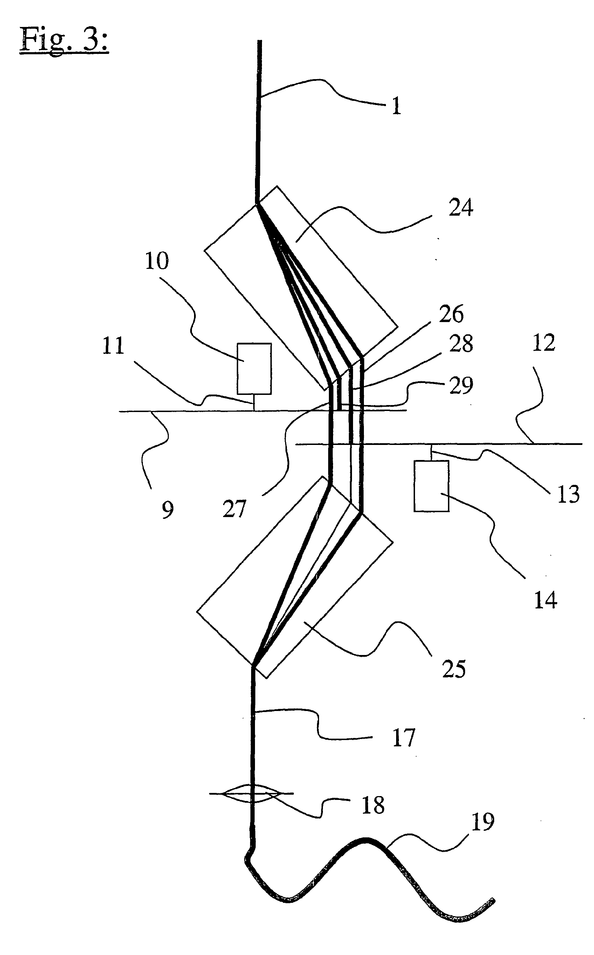

Fig. 3 zeigt in einer schematischen Darstellung das dritte Ausführungsbeispiel einer erfindungsgemäßen optischen Anordnung. Die Anordnung weist als dispersives Medium zwei Glaskörper bzw. Glasblöcke 24 und 25 auf. Ansonsten sind dieselben Blendenräder 9 und 12 wie bei dem zweiten Ausführungsbeispiel verwendet. Die Anordnung gemäß dem dritten Ausführungsbeispiel hat den Vorzug, daß die hohen Anforderungen an die Justiergenauigkeit reduziert sind. Eine Verkippung eines der Glasblöcke 24 oder 25 führt lediglich zu einem Parallelversatz, der die spektralen Eigenschaften der Anordnung nur in geringem Maß beeinträchtigt. Insbesondere wird eine Einkopplung in eine Lichtleitfaser 19 nach der Anordnung nicht beeinflußt, da das kollimierte wiedervereinigte Lichtbündel 17 auch bei einem Strahlversatz durch die Einkoppeloptik 18 auf das Faserende fokussiert wird. Der einlaufende Mehrfarbenlichtstrahl 1 ist vierfarbig. Er wird im Glasblock 24 spektral räumlich aufgefächert. Nach Verlassen des Glasblocks 24 treffen die spektral getrennt verlaufenden Lichtbündel 26, 27, 28 und 29 auf die beiden Blendenräder 9 und 12. Die Lichtbündel 26 und 27 passieren beide Blendenräder ungestört. Das Lichtbündel 29 wird vom Blendenrad 9 blockiert, während das Lichtbündel 28 vom Blendenrad 12 transversal beschnitten und somit in der Gesamtlichtleistung bzw. -intensität geschwächt wird. Mit Hilfe des Glasblocks 25 werden die verbleibenden Lichtbündel 26, 27 und 28 wieder zu einem Lichtbündel 17 vereinigt und in die Glasfaser 19 eingekoppelt.

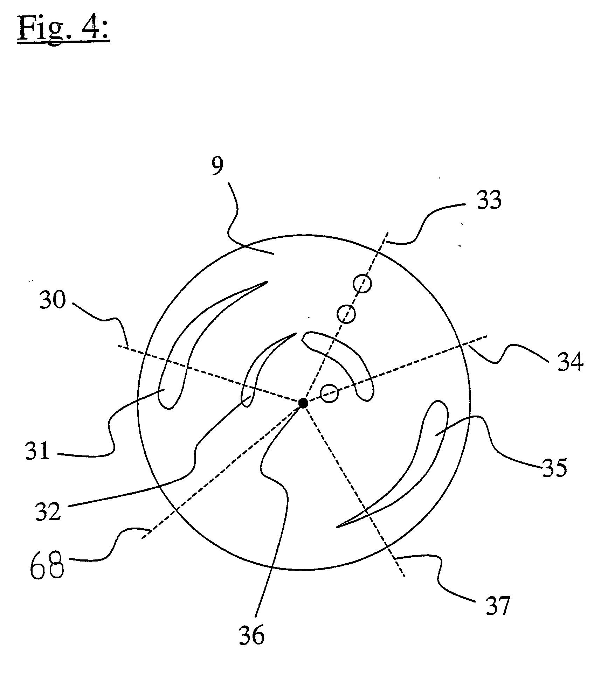

Fig. 4 zeigt in einer schematischen Draufsicht das Blendenrad 9 aus Fig. 2. In einer Stellung 30 würden die Blendendurchgänge 31 und 32 die Bündel 21 und 22 aus Fig. 2 beschneiden. Die Lichtbündel 20 und 23 würden blockiert. Durch Drehen des Blendenrads 9 im Uhrzeigersinn um eine Achse 36 würden die Gesamtlichtleistungen der beschnittenen Bündel 21 und 22 erhöht, wohingegen durch Drehen gegen den Uhrzeigersinn eine Verringerung der Gesamtlichtleistung der beschnittenen Bündel 21 und 22 eintreten würde. In einer Stellung 33 würde nur das Lichtbündel 20 blockiert. In einer Stellung 34 würden die Lichtbündel 20 und 22 blockiert. In einer Stellung 37 würden die Lichtbündel 21, 22 und 23 blockiert und das Lichtbündel 20 abgeschwächt. In einer Stellung 68 würden alle Bündel 20 bis 23 blockiert werden.

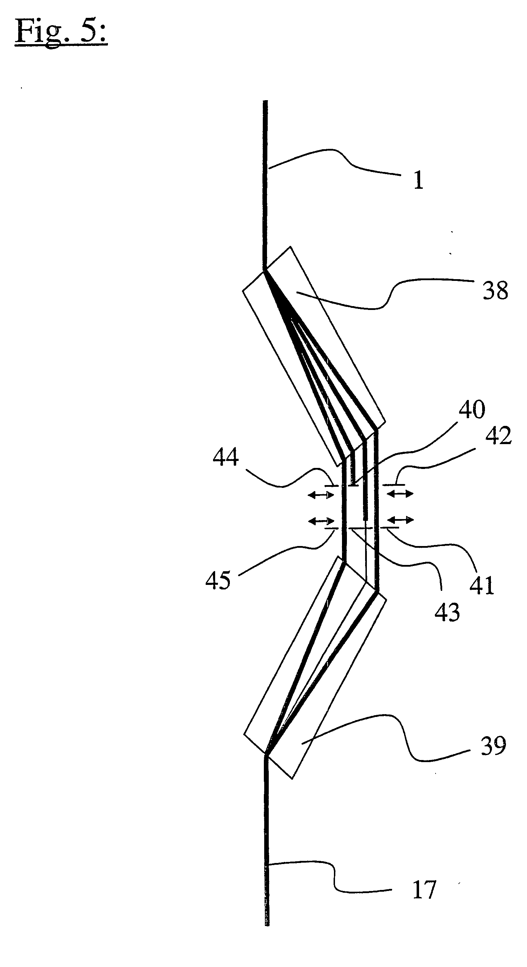

Fig. 5 zeigt in einer schematischen Darstellung das fünfte Ausführungsbeispiel einer erfindungsgemäßen optischen Anordnung. Bei dem in Fig. 5 gezeigten Ausführungsbeispiel sind als Abschwächungsmittel Blendenschieber 40 bis 45 vorgesehen. Zwei Glasblöcke 38 und 39 sind aus Gründen der Platzersparnis als Trapezoid ausgeführt.

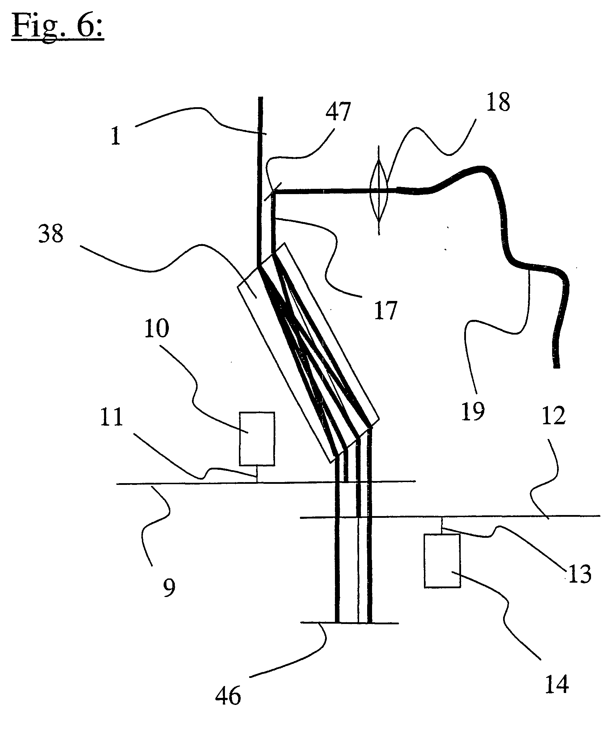

Fig. 6 zeigt in einer schematischen Darstellung das fünfte Ausführungsbeispiel einer erfindungsgemäßen optischen Anordnung. Dabei ist nur ein Glasblock 38 vorgesehen. Das durch zwei Blendenräder 9 und 12 beeinflußte Licht wird durch einen Spiegel 46 mit einem kleinen Winkelfehler in den Glasblock 38 rückreflektiert. Das Ausgangslicht 17 wird anschließend mit einem Spiegel 47 umgelenkt und in eine Glasfaser 19 eingekoppelt.

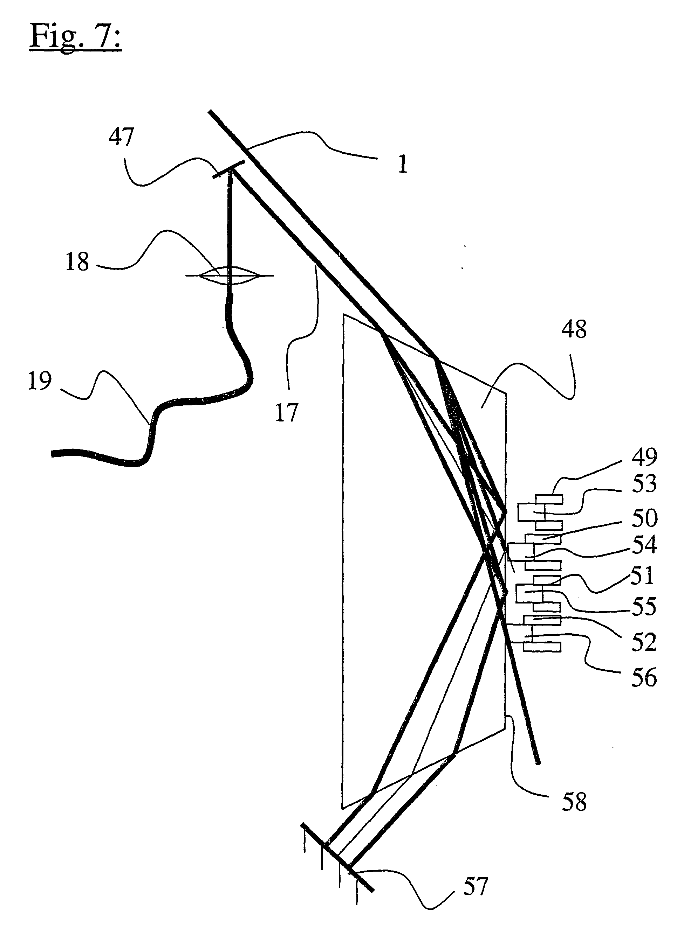

Fig. 7 zeigt in einer schematischen Darstellung das sechste Ausführungsbeispiel einer erfindungsgemäßen optischen Anordnung. Das Ausführungsbeispiel weist einen Glasblock 48 auf. Die räumlich spektral aufgespaltenen Lichtbündel würden ohne Glaselemente 53 bis 56 an der Grenzfläche 58 des Glasblocks 48 totalreflektiert. Der Grad der Totalreflexion kann durch gezielte Annäherung der Glasblöcke bzw. Glaselemente 53 bis 56 für jedes Lichtbündel einzeln gesteuert werden. Der vollständig anliegende Glasblock 56 verhindert eine Totalreflexion und koppelt damit das betreffende Lichtbündel vollständig aus. Die Glasblöcke 53 und 55 beeinflussen die jeweilige Totalreflexion aufgrund ihres großen Abstands nicht. Der Glasblock 54 befindet sich dicht an der Fläche 58, liegt allerdings nicht vollständig an. Dies bewirkt eine teilweise Auskopplung bzw. Abschwächung. Die Abstände werden mit Hilfe von Piezostellelementen 49 bis 52 eingestellt.

Hinsichtlich weiterer vorteilhafter Ausgestaltungen der erfindungsgemäßen optischen Anordnung wird zur Vermeidung von Wiederholungen auf den allgemeinen Teil der Beschreibung sowie auf die beigefügten Patentansprüche verwiesen.

Schließlich sei ausdrücklich darauf hingewiesen, daß die voranstehend beschriebenen Ausführungsbeispiele der erfindungsgemäßen optischen Anordnung lediglich zur Erörterung der beanspruchten Lehre dienen, diese jedoch nicht auf die Ausführungsbeispiele einschränken.

## Patentansprüche

1. Optische Anordnung zur zumindest teilweisen spektralen Selektion von Lichtanteilen aus einem Mehrfarbenlichtstrahl (1),
**gekennzeichne**t **durch** ein dispersives Medium zur spektralen räumlichen Auffächerung des Mehrfarbenlichtstrahls (1) in einzelne Lichtbündel (3; 20 - 23; 26 - 29) und ein Abschwächungsmittel (5, 6; 9, 12; 40 - 45; 53 - 56) zur zumindest teilweisen Abschwächung der Intensität eines oder mehrerer Lichtbündel (3; 20 - 23; 26 - 29).

2. Optische Anordnung nach Anspruch 1, **dadurch gekennzeichnet, daß** das dispersive Medium ein Prisma (2; 7) aufweist, wobei das Prisma (2) innerhalb einer durch die Lichtbündel (3) aufgespannten Ebene um eine senkrecht zu der Ebene verlaufende Achse drehbar und/oder dem Prisma (2) eine vorzugsweise eine Linse aufweisende Optik (4) nachgeordnet sein kann.

3. Optische Anordnung nach Anspruch 1 oder 2, **dadurch gekennzeichnet, daß** das dispersive Medium eine Vier-Prismen-Anordnung aufweist, wobei die Vier-Prismen-Anordnung vorzugsweise aus zwei zueinander spiegelsymmetrisch angeordneten Prismenpaaren (7, 8; 15, 16) besteht und die Prismenpaare (7, 8; 15, 16) bezüglich einer Senkrechten zur Ausbreitungsrichtung der Lichtbündel (20-23) spiegelsymmetrisch angeordnet sein können.

4. Optische Anordnung nach einem der Ansprüche 1 bis 3, **dadurch gekennzeichnet, daß** das dispersive Medium einen Glaskörper (24; 38; 48) aufweist, der quaderförmig, mit zwei parallelogrammförmigen Seitenflächen oder trapezoidal ausgebildet ist sein kann, wobei auch zwei Glaskörper (24, 25; 38, 39) bezüglich einer Senkrechten zur Ausbreitungsrichtung der Lichtbündel (26 - 29) spiegelsymmetrisch angeordnet sein können.

5. Optische Anordnung nach einem der Ansprüche 1 bis 4, **dadurch gekennzeichnet, daß** das Abschwächungsmittel (9, 12; 40 - 45) eine oder mehrere miteinander kombinierte Blenden aufweist, wobei die Blende oder Blenden durch mindestens ein um eine Drehachse drehbar gelagertes Blendenrad (9, 12) realisiert sein kann bzw. können, wobei vorzugsweise mehrere Blendenräder (9, 12) hintereinander angeordnet sind, wobei das Blendenrad (9, 12) oder die Blendenräder (9, 12) mindestens einen Blendendurchgang (31, 32, 35) aufweisen kann bzw. können, wobei die Drehachse parallel zur Ausbreitungsrichtung der Lichtbündel (20 - 23; 26 - 29) angeordnet sein kann, wobei das Blendenrad (9, 12) eine Scheibe mit mindestens einem Blendendurchgang (31, 32, 35) aufweisen kann und wobei die Scheibe ein Muster an Blendendurchgängen mit unterschiedlicher Anordnungsdichte aufweist.

6. Optische Anordnung nach Anspruch 5, **dadurch gekennzeichnet, daß** die Blende oder Blenden durch einen oder mehrere Blendenschieber (40 - 45) realisiert ist oder sind, wobei vorzugsweise mehrere Blendenschieber (40 - 45) hintereinander angeordnet sind, wobei die Schieberichtung des oder der Blendenschieber (40 - 45) senkrecht zur Ausbreitungsrichtung der Lichtbündel verlaufen kann, wobei der oder die Blendenschieber (40 - 45) mindestens einen Blendendurchgang aufweisen kann bzw. könne, wobei mindestens ein Blendendurchgang kreisrund sein kann und wobei mindestens ein Blendendurchgang (31, 32, 35) eine sich entlang einer vorgebbaren Strecke reduzierende Öffnungsweite aufweisen kann oder kometenschweifartig ausgebildet sein kann, so **daß** sich die Intensität eines durch den Blendendurchgang (31, 32, 35) beeinflußten Lichtbündels durch Drehen des Blendenrads (9, 12) oder Verschieben des Blendenschiebers (40 - 45) verändern läßt.

7. Optische Anordnung nach einem der Ansprüche 1 bis 6, **dadurch gekennzeichnet, daß** das Abschwächungsmittel einen oder mehrere Polarisatoren oder Polarisationsoptiken aufweist, wobei vorzugsweise zwei Linearpolarisatoren bereitgestellt sind und wobei mindestens ein Linearpolarisator drehbar gelagert sein kann.

8. Optische Anordnung nach einem der Ansprüche 1 bis 7, **dadurch gekennzeichnet, daß** das Abschwächungsmittel LCD-Elemente aufweist, wobei die LCD-Ansteuerfrequenz vorzugsweise mit der Strahlablenkfrequenz synchronisiert ist, wobei Intensitätsschwankungen elektronisch oder softwaregesteuert nach der Datennahme korrigierbar sein können und wobei ein LCD-Abschwächer zum Abschalten des Lichtstrahls an Strahlumkehrpunkten ausgebildet sein kann.

9. Optische Anordnung nach einem der Ansprüche 1 bis 8, **dadurch gekennzeichnet, daß** das Abschwächungsmittel Graukeile oder Neutraldichtefilter aufweist und/oder **daß** das Abschwächungsmittel mindestens eine die Totalreflexion eines Lichtbündels an einer Grenzfläche (58) beeinflussende Einrichtung aufweisen kann, wobei die Einrichtung ein der Grenzfläche (58) annäherbares Glaselement (53 - 56) aufweisen kann, wobei zur Annäherung des Glaselements (53 - 56) ein Stellelement bereitgestellt sein kann, wobei das Stellelement ein Piezostellelement (49 - 52) sein kann und wobei jedem Lichtbündel eine die Totalreflexion eines Lichtbündels an einer Grenzfläche (58) beeinflussende Einrichtung zugeordnet sein kann.

10. Optische Anordnung nach einem der Ansprüche 1 bis 9, **dadurch gekennzeichnet, daß** das Abschwächungsmittel eine Monomode-Glasfaser (6) und/oder eine vorzugsweise in ihrem Durchmesser einstellbare Lochblende aufweist.

11. Optische Anordnung nach einem der Ansprüche 1 bis 10, **dadurch gekennzeichnet, daß** ein zweites dispersives Medium (15, 16; 25; 39) zur Wiedervereinigung der verbleibenden Lichtbündel (20 - 22; 26 - 28) bereitgestellt ist.

12. Optische Anordnung nach einem der Ansprüche 1 bis 11, **dadurch gekennzeichnet, daß** nach dem Abschwächungsmittel eine Reflexionseinrichtung für das oder die Lichtbündel angeordnet ist, wobei die Reflexionseinrichtung derart angeordnet und/oder ausgebildet sein kann, **daß** das oder die reflektierten Lichtbündel mit einem von Null Grad zumindest geringfügig verschiedenen Reflexionswinkel reflektierbar ist oder sind, wobei die Reflexionseinrichtung einen Spiegel (46; 57) aufweisen kann.
